# EUROPEAN PATENT SPECIFICATION

(11) **EP 3 580 822 B1**
(45) Date of publication and mention of the grant of the patent: **06.12.2023**
(21) Application number: 18710161.3
(22) Date of filing: 08.02.2018
(51) Int. Cl.: H02G 1/08, G02B 6/44, G02B 6/50

(54) **METHOD AND DEVICE FOR CONVERTING A COAXIAL CABLE TO A GLASS-FIBRE CABLE**
VERFAHREN UND VORRICHTUNG ZUR UMWANDLUNG EINES KOAXIALKABELS IN EIN GLASFASERKABEL
PROCÉDÉ ET DISPOSITIF DE CONVERSION D'UN CÂBLE COAXIAL EN UN CÂBLE À FIBRE DE VERRE

(30) Priority: 13.02.2017 NL 1042264
(43) Date of publication of application: 18.12.2019
(73) Proprietor: AERIS B.V., 7522 CZ Enschede (NL)
(72) Inventor: KOKKELER, Franciscus Gerhardus Maria, NL-7522 CZ Enschede (NL); HEIBRINK, Jan, NL-8091 MK Wezep (NL)
(74) Representative: Mink-Lindenburg, Charlotte Hildegard
(86) International application number: PCT/NL2018/000005
(87) International publication number: WO 2018/147726

(56) References cited:
- WO-A1-82/00388
- AT-B- 412 425
- DE-A1- 10 027 562
- DE-A1- 19 545 347
- DE-C1- 19 718 327

## Description

### Field of the invention

The invention relates to a method for converting a coaxial cable to a glass-fibre cable, the coaxial cable comprising:
- an electrically conducting core extending centrally and longitudinally;
- a coaxial, cylindrical, electrically conducting shield extending longitudinally; and
- a dielectric extending between the core and the shield.

The invention also relates to a device for converting such a coaxial cable to a glass-fibre cable.

In the context of the invention `glass-fibre cable' is always understood to mean a cable comprising at least one optically conductive glass fibre. This will generally be a plurality of glass fibres, wherein a `glass-fibre cable' can also comprise one or more electrical conductors. The dielectric can comprise a number of radially extending spacers or be formed for instance by a foamed material such as foamed polyethylene, all of this as is usual.

### Background of the invention

Many networks for telecommunication still consist wholly or partially of underground coaxial cables. For various technical and economic reasons there is a great need to replace these coaxial cables with glass-fibre cables. The transition from 'copper to glass', or 'fiberization' of a network, does however entail high cost and takes a great deal of time, particularly because of the labour-intensive and time-consuming excavation work that is required and because of the time necessary to obtain the required permits for excavation in public spaces, in pavements, cycle paths and the like.

The present invention now provides a solution with which much work and time are saved and costs are drastically reduced.

### Summary of the invention

The invention provides a method as according to claim 1 and a device as according to claim 5. A coaxial cable can thus be converted relatively easily to a glass-fibre cable with a minimum of work and excavation within a relatively short time and at greatly reduced costs. The at least partially softened dielectric is preferably deformed and/or melted material of the at least partially melted dielectric is spread by means of advancing longitudinally inside the cable and inside the shield a first member provided for the purpose and configured and suitable therefor, which first member is more preferably advanced, pushed and/or pulled inside the cable and inside the shield by means of an elongate second member provided for the purpose and configured and suitable therefor. The dielectric can be heated here by means of the first member and/or the core and/or the shield, preferably resistively by means of realizing an electric current through the first member and/or the core and/or the shield.

A method according to the preamble of claim 1 and a device according to the preamble of claim 5 are known in the art, for example from DE10027562, WO82/00388, DE19718327 and DE19545347.

The core can be displaced radially here to a non-central position inside the cable and inside the shield. The frictional resistance between the second member and what surrounds it can thus be reduced. The core can also be wholly removed from the coaxial cable. At least one glass fibre is then introduced into the passage. At least one electrical conductor can here also be introduced into the passage. Via the at least one electrical conductor, optionally together with the shield, an amplifier present in the network of which the coaxial cable forms part can for instance be powered. The at least one glass fibre can be introduced into the passage in a usual manner such as blowing, but optionally also by pulling, wherein possible use can be made of the core during the removal thereof or of the second member during withdrawal thereof from the passage.

### Brief description of the drawings

The invention is further elucidated hereinbelow on the basis of a number of exemplary embodiments. In the drawings, more or less schematically:
- figure 1 shows a cross-section of a coaxial cable;
- figure 2 shows a cut-way side view thereof;
- figure 3 shows a cross-section of a coaxial cable during the conversion to a glass-fibre cable according to a first example of a method not forming part of the invention; and
- figure 4 shows a cross-section of the coaxial cable thus converted to a glass-fibre cable;
- figure 5 shows a cross-section of a coaxial cable during the conversion to a glass-fibre cable according to an embodiment of a method according to the invention; and
- figure 6 shows a cross-section of the coaxial cable thus converted to a glass-fibre cable;
- figure 7 shows a cross-section of a coaxial cable during the conversion to a glass-fibre cable according to a further example of a method not forming part of the invention; and
- figure 8 shows a device according to the invention.

### Exemplary embodiments

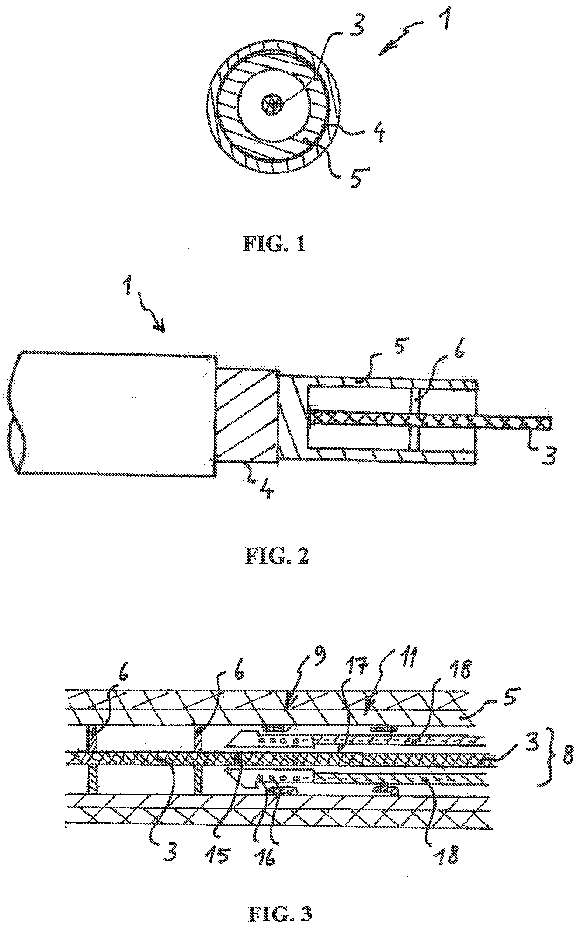

Figures 1 and 2 show a coaxial cable (1) comprising a core (3), a shield (4) and a dielectric (5) which in the shown example comprises a number of radially extending spacers (6). Figure 3 shows the conversion of coaxial cable (1) to a glass-fibre cable (2) according to a first example of a method not forming part of the invention. During the conversion the spacers (6) are heated such that spacers (6) at least partially soften and/or at least partially melt. The at least partially softened spacers (6) are deformed and/or the melted material of the at least partially melted spacers (6) is spread such that a passage (8) is created which is sufficiently large and suitable for introducing therein at least one glass fibre (7), in the shown example an entity of multiple glass fibres (7), two electrical conductors (14) and a jacket (23). Core (3) is here removed from coaxial cable (1).

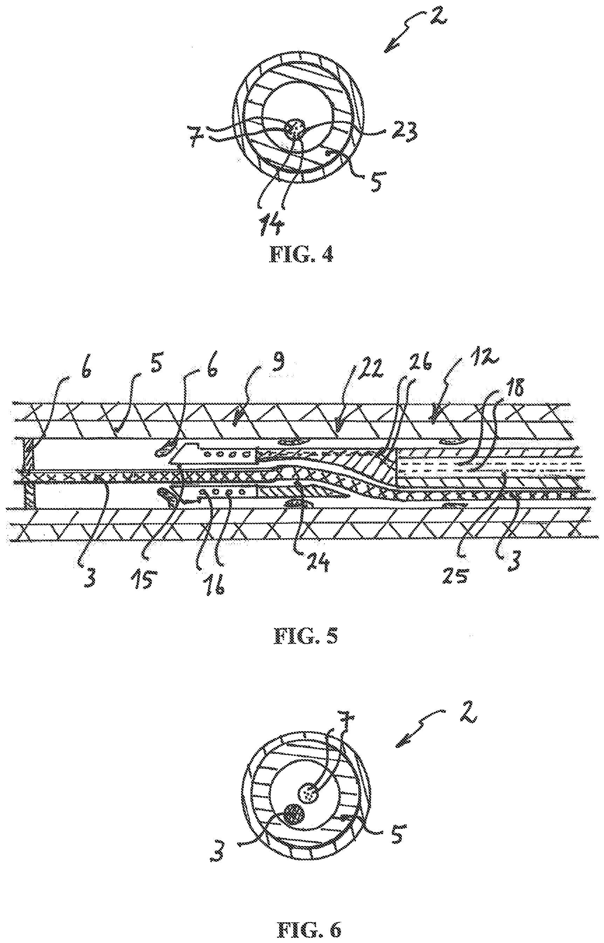

The heating and deforming of spacers (6) take place by advancing, in the shown example pushing, a first member (9) longitudinally inside cable (1) and inside shield (4), this by means of an elongate second member (11). First member (9) here comprises a first central cavity (15) in which core (3) can move longitudinally. First member (9) here also comprises an electrical conductor (16) for electro-resistive heating of first member (9) so that spacers (6) can also be heated by means of first member (9). Second member (11) comprises for this purpose electrical conductors (18) for conducting electric current to first member (9). Second member (11) is tubular here and comprises a second central cavity (17) in which core (3) can again move longitudinally. Figure 4 shows a section of the coaxial cable (1) thus converted to a glass-fibre cable (2).

Figure 5 shows the conversion of a coaxial cable (1) to a glass-fibre cable (2) according to an embodiment of a method according to the invention. Core (3) is now not removed here but displaced radially to a non-central position inside cable (1) and inside shield (4). This takes place by means of third means (22) which are situated between first member (9) and second member (12) and comprise for this purpose a third cavity (24) in which core (3) can again move longitudinally. Third cavity (24) is curved such that core (3) is guided to the outermost part of passage (8) as shown in figure 5. The frictional resistance between second member (9) and the wall of passage (8) and the displaced core (3) is thus reduced.

Second member (12) can now be solid or, as in the shown example, comprise a passage (25) for passage of for instance a liquid or gas for heating, cooling or lubrication, or as in the shown example, for throughfeed of electrical conductors (18) for conducting electric current via electrical conductors (26) provided for this purpose in third means (22) to first member (9), in this case the electrical conductor (16) for electro-resistive heating of first member (9). Figure 6 shows a section of the coaxial cable (1) thus converted to a glass-fibre cable (2). An amplifier present in the network of which coaxial cable (1) forms part can now for instance be powered via the core (3), which is left in place, together with shield (4).

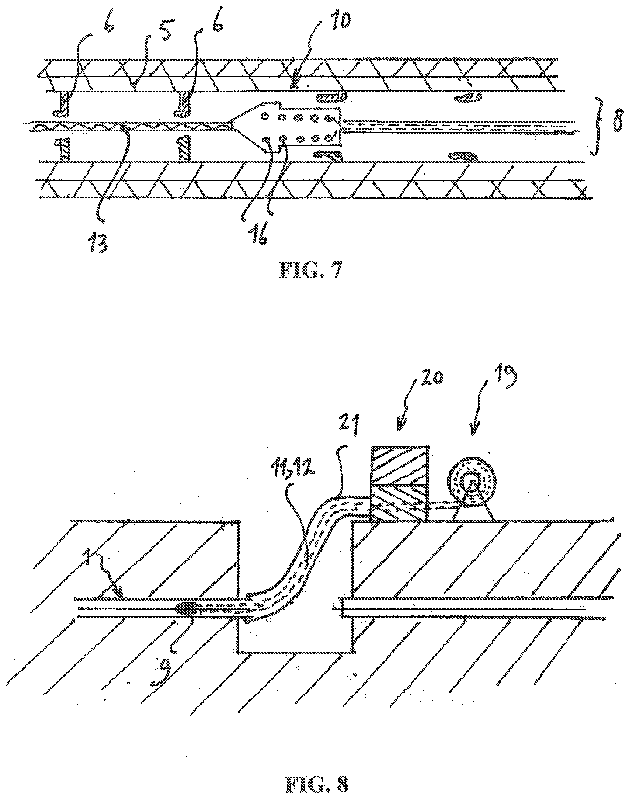

Figure 7 shows the conversion of a coaxial cable (1) to a glass-fibre cable (2) according to a second example of a method not forming part of the invention. A second member (13), here in the form of a pull cable, now serves to pull a first member (10) longitudinally inside the cable and inside the shield. Core (3) is removed beforehand, for instance by means of the first example described above and shown in figure 3.

In other embodiments of a method according to the invention the dielectric is (also) heated by means of the core and/or the shield, for instance by means of realizing an electric current through the core and/or the shield. The at least partial softening and/or melting of the dielectric can thus be accelerated. The core can in principle also be removed after heating of the dielectric solely by means of the core. The temperature can also be measured at a location appropriate therefor inside the coaxial cable by means of a temperature sensor, and the measured value can be used to control the temperature at a location appropriate therefor in the coaxial cable. The process of softening and/or melting of the dielectric can thus be better regulated and controlled. The second member is preferably provided with a cover layer for the purpose of reducing the frictional resistance between the second member and what surrounds it, the wall of the passage and/or the core. The maximum length of the coaxial cable to be converted can thus be increased.

Figure 8 shows a device according to the invention comprising storage means (19), here in the form of a reel, for at least partially storing the second member. The device here also comprises drive means (20) for driving the second member as well as control means for controlling drive means (20). The force exerted on second member (11,12), and thereby the force exerted on first member (9), as well as the speed at which the first member moves through coaxial cable (1), can thus be better regulated and controlled. The device also comprises guide means (21) for guiding second member (11,12) between drive means (20) and coaxial cable (1). Such a guiding is particularly important in the case second member (11,12) moves the first member (9) by means of pushing.

It will be apparent that the invention is not limited to the given exemplary embodiments but that diverse variants and combinations obvious to a skilled person are possible within the scope of the invention.

## Claims

1. Method for converting a coaxial cable (1) to a glass-fibre cable (2), the coaxial cable comprising:
- an electrically conducting core (3) extending centrally and longitudinally;
- a coaxial, cylindrical, electrically conducting shield (4) extending longitudinally; and
- a dielectric (5) extending between the core and the shield,
whereby the method comprises the steps of:
- heating the dielectric such that the dielectric at least partially softens and/or at least partially melts; and
- deforming the at least partially softened dielectric and/or spreading melted material of the at least partially melted dielectric such that a passage (8) is created, which passage extends longitudinally inside the cable and inside the shield and is sufficiently large and suitable for introducing therein at least one glass fibre, whereby the at least partially softened dielectric is deformed and/or melted material of the at least partially melted dielectric is spread by means of advancing longitudinally inside the cable and inside the shield a first member (9,10) provided for the purpose and configured therefor, wherein said first member (9) comprises a first central cavity in which the core moves longitudinally, and the first member (9,10) is advanced inside the cable and inside the shield by means of an elongate second member (11,12,13) provided for the purpose and configured therefor, **characterized in that** the core is displaced radially to a non-central position inside the cable (1) and inside the shield by further means (22) which are situated between the first member (9) and the second member (12) and comprise a further cavity (24) in which the core (3) moves longitudinally, which further cavity (24) is curved such that core (3) is guided to the outermost part of passage (8) and outside of second member (12).

2. Method as claimed in claim 1, **characterized in that** the first member (9) is pushed or pulled longitudinally inside the cable and inside the shield by means of the second member (11,12).

3. Method as claimed in claim 1 or 2, **characterized in that** heating takes place by means of realizing an electric current through the first member or the core or the shield.

4. Method as claimed in any of the foregoing claims, **characterized in that** the temperature is measured at a location appropriate therefor inside the coaxial cable by means of a sensor provided for the purpose and configured therefor, and the measured value is used to control the temperature at a location appropriate therefor in the coaxial cable.

5. Device for converting a coaxial cable (1) to a glass-fibre cable (2), the coaxial cable comprising:
- an electrically conducting core (3) extending centrally and longitudinally;
- a coaxial, cylindrical, electrically conducting shield (4) extending longitudinally; and
- a dielectric (5) extending between the core and the shield,
whereby the device comprises:
- first means configured for heating the dielectric such that the dielectric at least partially softens and/or at least partially melts; and
second means configured for deforming the at least partially softened dielectric and/or spreading melted material of the at least partially melted dielectric such that a passage (8) is created, which passage extends longitudinally inside the cable and inside the shield and is sufficiently large and suitable for introducing therein at least one glass fibre, whereby the second means comprise a first member (9,10), which first member is configured to be advanced longitudinally inside the cable and inside the shield, and an elongate second member (11,12,13) configured to advance first member (9,10) longitudinally inside the cable and inside the shield, wherein the first member (9) comprises a first central cavity (15) in which the core can move longitudinally, **characterized in that** the device comprises third means (22) configured to displace the core radially to a non-central position inside the cable and inside the shield, wherein the third means (22) are situated between the first member (9) and the second member (12) and comprise a third cavity (24) in which core (3) can again move longitudinally, which third cavity (24) is curved such that core (3) is guided to the outermost part of passage (8) and outside of second member (12).

6. Device as claimed in claim 5, **characterized in that** the first member (9) comprises an electrical conductor (16) configured for electro-resistive heating of the first member.

7. Device as claimed in claim 5 or 6, **characterized in that** the second member (11,12) is configured to push or pull the first member (9) longitudinally inside the cable and inside the shield.

8. Device as claimed in any of the claims 5-7, **characterized in that** the second member comprises at least one electrical conductor (18) for conducting electric current via electrical conductors (26) provided for this purpose in third means (22) to first member (9).

9. Device as claimed in any of the claims 5-8, **characterized in that** the device also comprises storage means (19) configured for at least partially storing the second member.

10. Device as claimed in any of the claims 5-9, **characterized in that** the device also comprises drive means (20) configured for driving the second member.

11. Device as claimed in claim 10, **characterized in that** the device also comprises control means configured for controlling the drive means.

12. Device as claimed in claim 10 or 11, **characterized in that** the device also comprises guide means (21) configured for guiding the second member between the drive means and the coaxial cable.

13. Device as claimed in any of the claims 5-12, **characterized in that** the second member is provided with a cover layer configured for reducing the frictional resistance between the second member and what surrounds it.

14. Device as claimed in any of the claims 5-13, **characterized in that** the second member is provided with at least one passage (25) configured for passage of a liquid or gas.

15. Device as claimed in any of the claims 5-14, **characterized in that** the device also comprises:
- a sensor configured for measuring the temperature at a location appropriate therefor inside the coaxial cable; and
- sixth means configured for using the measured value to control the temperature at a location appropriate therefor in the coaxial cable.

## Patentansprüche

1. Verfahren zur Umwandlung eines Koaxialkabels (1) in ein Glasfaserkabel (2), wobei das Koaxialkabel umfasst:
- ein elektrisch leitender Kern (3), der sich mittig und in Längsrichtung erstreckt;
- eine koaxiale, zylindrische, elektrisch leitende Abschirmung (4), die sich in Längsrichtung erstreckt; und
- ein Dielektrikum (5), das sich zwischen dem Kern und der Abschirmung erstreckt,
wobei das Verfahren die folgenden Schritte umfasst:
- Erwärmen des Dielektrikums, so dass das Dielektrikum zumindest teilweise erweicht und/oder zumindest teilweise schmilzt; und
- Verformen des zumindest teilweise erweichten Dielektrikums und/oder Ausbreiten von geschmolzenem Material des zumindest teilweise geschmolzenen Dielektrikums, so dass ein Durchgang (8) geschaffen wird, der sich in Längsrichtung innerhalb des Kabels und innerhalb der Abschirmung erstreckt und ausreichend groß und geeignet ist, um darin zumindest eine Glasfaser einzuführen, wobei das zumindest teilweise erweichte Dielektrikum verformt wird und/oder geschmolzenes Material des zumindest teilweise geschmolzenen Dielektrikums ausgebreitet wird, indem ein erstes Element (9, 10), das für diesen Zweck vorgesehen und dafür konfiguriert ist, in Längsrichtung innerhalb des Kabels und innerhalb der Abschirmung vorgeschoben wird, wobei das erste Element (9) einen ersten zentralen Hohlraum aufweist, in dem sich der Kern in Längsrichtung bewegt, und das erste Element (9, 10) innerhalb des Kabels und innerhalb der Abschirmung mittels eines langgestreckten zweiten Elements (11, 12, 13) vorgeschoben wird, das für diesen Zweck vorgesehen und dafür ausgebildet ist, **dadurch gekennzeichnet, dass** der Kern radial in eine nicht zentrale Position innerhalb des Kabels (1) und innerhalb der Abschirmung durch weitere Mittel (22) verschoben wird, die zwischen dem ersten Element (9) und dem zweiten Element (12) angeordnet sind und einen weiteren Hohlraum (24) umfassen, in dem sich der Kern (3) in Längsrichtung bewegt, wobei der weitere Hohlraum (24) so gekrümmt ist, dass der Kern (3) zum äußersten Teil des Durchgangs (8) und außerhalb des zweiten Elements (12) geführt wird.

2. Verfahren nach Anspruch 1, **dadurch gekennzeichnet, dass** das erste Element (9) in Längsrichtung innerhalb des Kabels und innerhalb der Abschirmung mittels des zweiten Elements (11, 12) geschoben oder gezogen wird.

3. Verfahren nach Anspruch 1 oder 2, **dadurch gekennzeichnet, dass** die Erwärmung durch die Erzeugung eines elektrischen Stroms durch das erste Element oder den Kern oder die Abschirmung erfolgt.

4. Verfahren nach einem der vorstehenden Ansprüche, **dadurch gekennzeichnet, dass** die Temperatur an einer dafür geeigneten Stelle im Inneren des Koaxialkabels mittels eines dafür vorgesehenen und konfigurierten Sensors gemessen wird und der Messwert zur Steuerung der Temperatur an einer dafür geeigneten Stelle im Koaxialkabel verwendet wird.

5. Vorrichtung zur Umwandlung eines Koaxialkabels (1) in ein Glasfaserkabel (2), wobei das Koaxialkabel umfasst:
- ein elektrisch leitender Kern (3), der sich in der Mitte und in Längsrichtung erstreckt;
- eine koaxiale, zylindrische, elektrisch leitende Abschirmung (4), die sich in Längsrichtung erstreckt; und
- ein Dielektrikum (5), das sich zwischen dem Kern und der Abschirmung erstreckt,
wobei die Vorrichtung umfasst:
- ein erstes Mittel, das zum Erwärmen des Dielektrikums konfiguriert ist, so dass das Dielektrikum zumindest teilweise erweicht und/oder zumindest teilweise schmilzt; und zweite Mittel, die so konfiguriert sind, dass sie das zumindest teilweise erweichte Dielektrikum verformen und/oder geschmolzenes Material des zumindest teilweise geschmolzenen Dielektrikums ausbreiten, so dass ein Durchgang (8) geschaffen wird, der sich in Längsrichtung innerhalb des Kabels und innerhalb der Abschirmung erstreckt und ausreichend groß und geeignet ist, um darin mindestens eine Glasfaser einzuführen, wobei die zweiten Mittel ein erstes Element (9, 10) umfassen, das so konfiguriert ist, dass es in Längsrichtung innerhalb des Kabels und innerhalb der Abschirmung vorgeschoben werden kann, und ein längliches zweites Element (11, 12, 13) umfassen, das so konfiguriert ist, dass es das erste Element (9, 10) in Längsrichtung innerhalb des Kabels und innerhalb der Abschirmung vorschiebt, wobei das erste Element (9) einen ersten zentralen Hohlraum (15) umfasst, in dem sich der Kern in Längsrichtung bewegen kann,
**dadurch gekennzeichnet, dass** die Vorrichtung dritte Mittel (22) umfasst, die so konfiguriert sind, dass sie den Kern radial in eine nicht zentrale Position innerhalb des Kabels und innerhalb der Abschirmung verschieben, wobei die dritten Mittel (22) zwischen dem ersten Element (9) und dem zweiten Element (12) angeordnet sind und einen dritten Hohlraum (24) umfassen, in dem sich der Kern (3) wiederum in Längsrichtung bewegen kann, wobei der dritte Hohlraum (24) so gekrümmt ist, dass der Kern (3) zum äußersten Teil des Durchgangs (8) und außerhalb des zweiten Elements (12) geführt wird.

6. Vorrichtung nach Anspruch 5, **dadurch gekennzeichnet, dass** das erste Element (9) einen elektrischen Leiter (16) umfasst, der für eine elektro-resistive Erwärmung des ersten Elements konfiguriert ist.

7. Vorrichtung nach Anspruch 5 oder 6, **dadurch gekennzeichnet, dass** das zweite Element (11, 12) so konfiguriert ist, dass es das erste Element (9) in Längsrichtung innerhalb des Kabels und innerhalb der Abschirmung schiebt oder zieht.

8. Vorrichtung nach einem der Ansprüche 5-7, **dadurch gekennzeichnet, dass** das zweite Element mindestens einen elektrischen Leiter (18) zum Leiten von elektrischem Strom über elektrische Leiter (26), die zu diesem Zweck in dritten Mitteln (22) vorgesehen sind, zum ersten Element (9) umfasst.

9. Vorrichtung nach einem der Ansprüche 5 bis 8, **dadurch gekennzeichnet, dass** die Vorrichtung auch Speichermittel (19) umfasst, die zum zumindest teilweisen Speichern des zweiten Elements konfiguriert sind.

10. Vorrichtung nach einem der Ansprüche 5-9, **dadurch gekennzeichnet, dass** die Vorrichtung auch Antriebsmittel (20) umfasst, die für den Antrieb des zweiten Elements konfiguriert sind.

11. Vorrichtung nach Anspruch 10, **dadurch gekennzeichnet, dass** die Vorrichtung auch Steuermittel umfasst, die zur Steuerung der Antriebsmittel konfiguriert sind.

12. Vorrichtung nach Anspruch 10 oder 11, **dadurch gekennzeichnet, dass** die Vorrichtung auch ein Führungsmittel (21) umfasst, die zum Führen des zweiten Elements zwischen dem Antriebsmittel und dem Koaxialkabel konfiguriert ist.

13. Vorrichtung nach einem der Ansprüche 5 bis 12, **dadurch gekennzeichnet, dass** das zweite Element mit einer Deckschicht versehen ist, die so konfiguriert ist, dass sie den Reibungswiderstand zwischen dem zweiten Element und dem, was es umgibt, verringert.

14. Vorrichtung nach einem der Ansprüche 5-13, **dadurch gekennzeichnet, dass** das zweite Element mit mindestens einem Durchgang (25) versehen ist, der für den Durchgang einer Flüssigkeit oder eines Gases konfiguriert ist.

15. Vorrichtung nach einem der Ansprüche 5-14, **dadurch gekennzeichnet, dass** die Vorrichtung außerdem umfasst:
- einen Sensor, der so konfiguriert ist, dass er die Temperatur an einer dafür geeigneten Stelle im Inneren des Koaxialkabels misst; und
- ein sechstes Mittel, die so konfiguriert ist, dass sie den gemessenen Wert verwendet, um die Temperatur an einer dafür geeigneten Stelle in dem Koaxialkabel zu steuern.

## Revendications

1. Procédé pour convertir un câble coaxial (1) en un câble en fibre de verre (2), le câble coaxial comprenant :
- une âme conductrice d'électricité (3) s'étendant de façon centrée et longitudinale ;
- un blindage coaxial, cylindrique, conducteur d'électricité (4) s'étendant de façon longitudinale ; et
- un diélectrique (5) s'étendant entre l'âme et le blindage,
le procédé comprenant les étapes suivantes :
- chauffer le diélectrique de sorte qu'il se ramollisse au moins partiellement et/ou qu'il fonde au moins partiellement ; et
- déformer le diélectrique au moins partiellement ramolli et/ou écarter le matériau fondu du diélectrique fondu au moins partiellement de manière à créer un passage (8) qui s'étend longitudinalement à l'intérieur du câble et à l'intérieur du blindage et qui est suffisamment large et adapté pour y introduire au moins une fibre de verre, le diélectrique au moins partiellement ramolli étant déformé et/ou la matière fondue du diélectrique au moins partiellement fondu étant écartée en faisant avancer longitudinalement à l'intérieur du câble et à l'intérieur du blindage un premier élément (9, 10) prévu à cet effet et configuré à cet effet, ledit premier élément (9) comprenant une première cavité centrale dans laquelle l'âme se déplace longitudinalement, et le premier élément (9, 10) étant avancé à l'intérieur du câble et à l'intérieur du blindage au moyen d'un deuxième élément allongé (11, 12, 13) prévu à cet effet et configuré pour cela, **caractérisé en ce que** l'âme est déplacée radialement vers une position non centrale à l'intérieur du câble (1) et à l'intérieur du blindage par des moyens supplémentaires (22) qui sont situés entre le premier élément (9) et le deuxième élément (12) et qui comprennent une cavité supplémentaire (24) dans laquelle l'âme (3) se déplace longitudinalement, laquelle cavité supplémentaire (24) est incurvée de telle sorte que l'âme (3) est guidée vers la partie la plus extérieure du passage (8) et à l'extérieur du deuxième élément (12).

2. Procédé selon la revendication 1, **caractérisé en ce que** le premier élément (9) est poussé ou tiré longitudinalement à l'intérieur du câble et à l'intérieur du blindage au moyen du deuxième élément (11, 12).

3. Procédé selon la revendication 1 ou 2, **caractérisé en ce que** le chauffage s'effectue par la réalisation d'un courant électrique à travers le premier élément ou l'âme ou le blindage.

4. Procédé selon l'une quelconque des revendications précédentes, **caractérisé en ce que** la température est mesurée à un endroit approprié à l'intérieur du câble coaxial au moyen d'un capteur prévu à cet effet et configuré à cet effet, et la valeur mesurée est utilisée pour contrôler la température à un endroit approprié dans le câble coaxial.

5. Dispositif pour convertir un câble coaxial (1) en un câble en fibre de verre (2), le câble coaxial comprenant :
- une âme conductrice d'électricité (3) s'étendant de façon centrée et longitudinale ;
- un blindage coaxial, cylindrique et conducteur d'électricité (4) s'étendant de façon longitudinale ; et
- un diélectrique (5) s'étendant entre l'âme et le blindage,
le dispositif comprenant :
- des premiers moyens configurés pour chauffer le diélectrique de manière à ce que le diélectrique se ramollisse au moins partiellement et/ou fonde au moins partiellement ; et
- des seconds moyens configurés pour déformer le diélectrique au moins partiellement ramolli et/ou écarter le matériau fondu du diélectrique au moins partiellement fondu de manière à créer un passage (8) qui s'étend longitudinalement à l'intérieur du câble et à l'intérieur du blindage et qui est suffisamment large et adapté pour y introduire au moins une fibre de verre, les deuxièmes moyens comprenant un premier élément (9, 10), qui est configuré pour être avancé longitudinalement à l'intérieur du câble et à l'intérieur du blindage, et un deuxième élément allongé (11, 12, 13) configuré pour faire avancer le premier élément (9, 10) longitudinalement à l'intérieur du câble et à l'intérieur du blindage, le premier élément (9) comprenant une première cavité centrale (15) dans laquelle l'âme peut se déplacer longitudinalement, **caractérisé en ce que** le dispositif comprend des troisièmes moyens (22) configurés pour déplacer l'âme radialement vers une position non centrale à l'intérieur du câble et à l'intérieur du blindage, les troisièmes moyens (22) étant situés entre le premier élément (9) et le deuxième élément (12) et comprennent une troisième cavité (24) dans laquelle l'âme (3) peut de nouveau se déplacer longitudinalement, cette troisième cavité (24) étant incurvée de telle sorte que l'âme (3) est guidée vers la partie la plus extérieure du passage (8) et à l'extérieur du deuxième élément (12).

6. Dispositif selon la revendication 5, **caractérisé en ce que** le premier élément (9) comprend un conducteur électrique (16) configuré pour chauffer le premier élément par électro-résistance.

7. Dispositif selon la revendication 5 ou 6, **caractérisé en ce que** le deuxième élément (11, 12) est configuré pour pousser ou tirer le premier élément (9) longitudinalement à l'intérieur du câble et à l'intérieur du blindage.

8. Dispositif selon l'une quelconque des revendications 5 à 7, **caractérisé en ce que** le deuxième élément comprend au moins un conducteur électrique (18) pour conduire le courant électrique vers le premier élément (9) par le biais de conducteurs électriques (26) prévus à cet effet dans des troisièmes moyens (22).

9. Dispositif selon l'une quelconque des revendications 5 à 8, **caractérisé en ce que** le dispositif comprend en outre des moyens de stockage (19) configurés pour stocker au moins partiellement le deuxième élément.

10. Dispositif selon l'une quelconque des revendications 5 à 9, **caractérisé en ce que** le dispositif comprend en outre des moyens d'entraînement (20) configurés pour entraîner le deuxième élément.

11. Dispositif selon la revendication 10, **caractérisé en ce que** le dispositif comprend en outre des moyens de commande configurés pour commander les moyens d'entraînement.

12. Dispositif selon la revendication 10 ou 11, **caractérisé en ce que** le dispositif comprend en outre des moyens de guidage (21) configurés pour guider le deuxième élément entre les moyens d'entraînement et le câble coaxial.

13. Dispositif selon l'une quelconque des revendications 5 à 12, **caractérisé en ce que** le deuxième élément est pourvu d'une couche de recouvrement configurée pour réduire la résistance au frottement entre le deuxième élément et ce qui l'entoure.

14. Dispositif selon l'une quelconque des revendications 5-13, **caractérisé en ce que** le deuxième élément est pourvu d'au moins un passage (25) configuré pour le passage d'un liquide ou d'un gaz.

15. Dispositif selon l'une quelconque des revendications 5-14, **caractérisé en ce que** le dispositif comprend en outre :
- un capteur configuré pour mesurer la température à un endroit approprié à l'intérieur du câble coaxial ; et
- des sixièmes moyens configurés pour utiliser la valeur mesurée afin de contrôler la température à un endroit approprié à l'intérieur du câble coaxial.
